# EUROPEAN PATENT SPECIFICATION

(11) **EP 2 494 233 B1**
(45) Date of publication and mention of the grant of the patent: **10.09.2014**
(21) Application number: 10807479.0
(22) Date of filing: 26.10.2010
(51) Int. Cl.: F16F 1/04, F16F 1/12

(54) **SPRING STIFFNESS AND PRETENSION ADJUSTING SYSTEM**
SYSTEM ZUR EINSTELLUNG DER STEIFIGKEIT UND VORSPANNUNG BEI EINER FEDER
SYSTÈME DE RÉGLAGE DE LA RIGIDITÉ ET DE LA TENSION PRÉALABLE DE RESSORTS

(30) Priority: 27.10.2009 IT PD20090308
(43) Date of publication of application: 05.09.2012
(73) Proprietor: Corso, Matteo, 35036 Montegrotto Terme (IT)
(72) Inventor: Corso, Matteo, 35036 Montegrotto Terme (IT)
(74) Representative: Banfi, Paolo
(86) International application number: PCT/IB2010/054846
(87) International publication number: WO 2011/051884

(56) References cited:
- EP-A1- 1 843 058
- DE-A1-102007 011 325
- DE-U1-202007 017 158
- JP-A- 10 267 062
- US-A- 5 044 614
- US-A- 5 553 836
- US-A1- 2008 099 968
- US-A1- 2008 210 842
- US-B1- 6 471 197

## Description

### Technical Field

This patent application relates to a springs stiffness adjusting system i.e. a system for adjusting the stiffness K of springs which is suitable of being advantageously applied as shock-absorber or fork to any mechanical system involving the use of springs such as cars, trucks, campers, bicycles, quads, and motorcycles of any kind.

### Background Art

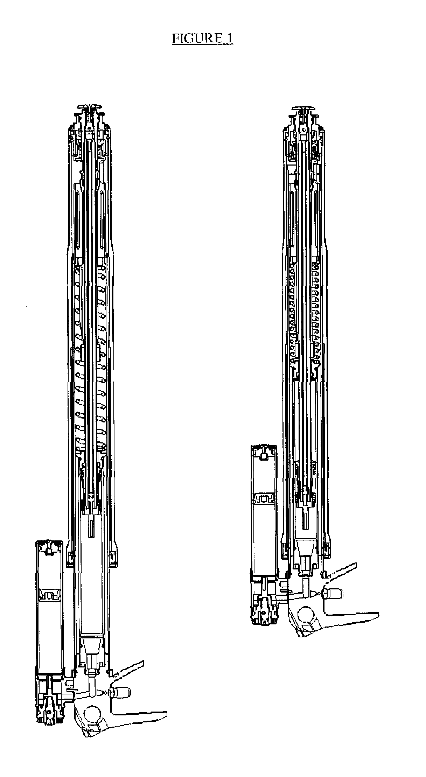

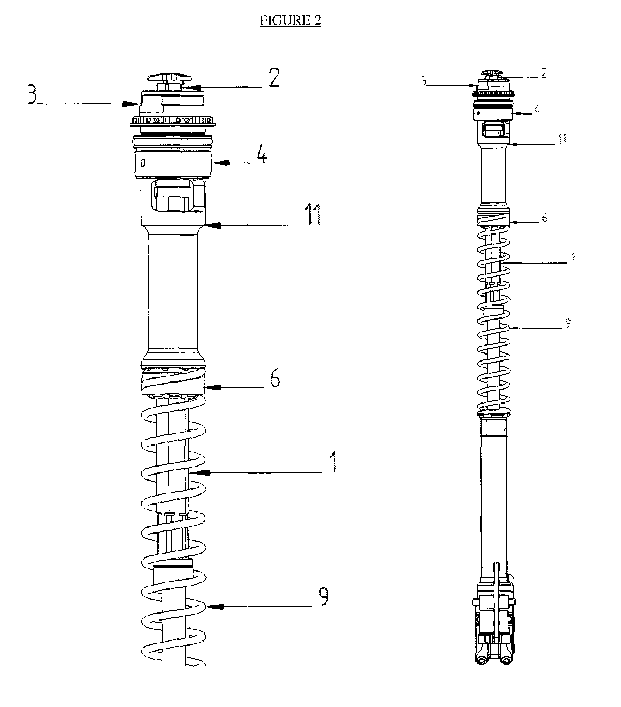

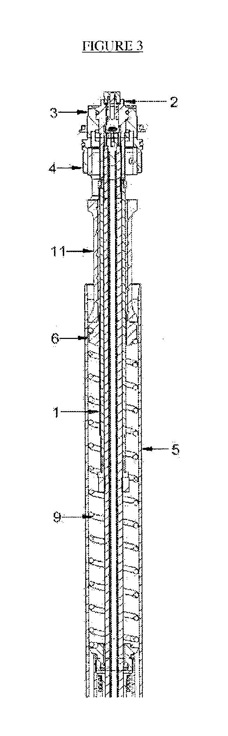

It has been well known that the mechanical work of a suspension or a fork is given by two systems that slide over each other. More specifically, as far as the motorcycle field is concerned, the upper system, e.g. the bike frame, is directly connected to the bike, while the lower system is directly connected to the wheel. The mechanical mean that connects the two systems is the spring which is compressed during the stroke of the fork. The maximum stroke occurs when an appropriate element of the upper system rests upon an equally appropriate element of the lower system. Figure 1 shows a shank of the fork in the condition called 'extended position' and the configuration of said shank for any value of the stroke of said spring.

Likewise, it is known that springs are characterized by an elastic constant called k (for which it is valid the formula F=k*x with F equal to the force generated by the spring after a compression x of said spring) that represents the stiffness of the spring. The bigger the value of k, the greater the external force to obtain a given compression of the spring. Given the stiffness k of a spring, it is possible to plot a straight line, or a curve, that represents its elastic behaviour on a plane called 'External Force vs. Compression'. This plot is the well-known characteristic curve of the spring.

In this technical field several solutions have been proposed by different inventors. A first solution is described, for instance, in US Patent 5 553 836 which discloses an adjustable vehicle suspension system comprising a geared adjustment mechanism that allows levelling of a motorised vehicle body. In this solution, no means for spring stiffness and spring preload adjustment are provided. Particularly, under working conditions, the stiffness of the spring within this system is not modified. Moreover this system is too big and therefore not suitable for application as a fork, for instance, as a motorbike fork. The system is therefore useful only when transporting a heavy load because it allows manual or automatic adjustment to raise or lower the body of the vehicle.

In a second patent document EP1843058 (Neotek Co. Ltd) an adjustable spring coefficient system of a helical spring is described, but the spring adjustment mechanism works only with large diameter helical springs and is suitable only for application in a shock absorbing device. The application in a fork of this claimed solution is not possible.

The use of forks or shock absorber employing the preload to modify the characteristic curve of the spring is particularly widespread in the motorcycle field. In general the preload is obtained through a disk with a vertical motion placed at one end of the spring. This adjusting system can be recognized in patents US 2006/0180419 and US 1995/5409248 for instance. Even Ohlins®, one of the world's best known fork manufacturers, adopts this type of adjustment for its products. Acting from the cap of the fork, it is possible to move the disk and to increase or decrease the load which the spring is subject to without compressing the shank.

The adjustment of the characteristic curve through the preload has some restrictions due to the fact that if you want to increase the value of force to a specific stroke, you must increase with the same value all the points of the characteristic curve. Therefore, the user is often forced to replace the spring with another one having a different stiffness. As a consequence, this type of adjustment is considerable both work and time consuming.

In another patent document namely US 5044614 ('Shock absorber spring adjuster') a shock absorber permitting simple and rapid alteration of length of coil spring is described. During adjustment of the shock absorber the stiffness of the spring is not modified. The same mechanism of shock adjuster setting is also described in several other documents such as DE202007017158 ("Damping adjustable front wheel fork for a bicycle"). The front wheel fork is designed such that the fork permits adjustment of a damping path without changing an elongation rate of the compression spring.
Therefore, in this solution the stiffness of the spring within this system is not modified under working conditions. Moreover, the solution disclosed is based on a spring having a very complex shape and characterized by a specially machined upper end.

DE102007011325 describes a spring holding part for fixing screw tension spring which has external thread basic diameter larger than spring's internal diameter when compressed and/or external thread pitch greater than spring pitch when compressed. The solution is suitable for fixing a screw tension spring. Also in this solution the stiffness of the spring within this system is not modified under working conditions.

Lastly, US patent 0099968 describes an adjustable and progressive coil spring damping system for use in shanks of mountain bicycle fork. The disclosed damping system is based on two coupled springs whose length changes as a function of to user setting. Therefore also the pre-load changes accordingly.

The solutions known in the art comprise one or more springs inside a fork which are compressed by a disk that rests onto the end coils that are generally closed and ground to provide a flat plane.

The springs stiffness adjusting system herein disclosed introduces a novel element of thrust on the spring which relies on a new type of bearing surface composed of a helical groove having the same pitch of the coils of the spring. Thanks to this new element, the spring can be pushed from different heights inactivating some coils.

### Disclosure of Invention

### Technical Problem

In several demanding applications and technical fields, for instance the motorcycle industry, and more specifically during competitions, a key factor for best results achievement is quickness during the setting-up operations of the bike or, more generally, of the vehicle. This may happen during the qualifying sessions or during the races themselves, should the weather conditions suddenly change causing a need for a sudden modification of the set-up of the bike. The adjustable mechanism object of this invention directly tackle this technical problem and concerns both the front and rear suspensions of the bike.

Currently to achieve the right set-up you must act on the spring preload, leading the translation of its characteristic curve to the x-axis on the 'Force vs. Compression' plane. Nevertheless, if both the minimum and maximum preload do not lead to the achievement of the optimum setting, for instance for a front suspension in a given race track and with given weather conditions, the spring must be replaced.

According to what above-described, there exists a need for identifying an improved system capable of either solving or overcoming the problems just mentioned. This invention describes and claims a new mechanism for adjusting the characteristic curve of the spring, saving a considerable amount of time when finding the right setting of a mechanical suspension. The invention allows the variation of the stiffness of a spring and, as a consequence, once inserted into the fork, the spring is no longer replaced.

### Technical Solution

This invention describes and claims a springs stiffness adjusting system convenientely designed for changing the value of stiffness of the spring used in a suspension. Its main purpose is to disclose a new method for adjusting suspensions possible, and, at the same time, dramatically reduce the time needed for the set-up. The mechanism is meant to substitute or support the spring preload, the current way to set up racing bikes.

The new system described herein, acts on coils enabling the variation of the stiffness of the spring in the fork or of the spring in the shock absorber, thus avoiding its replacement. Therefore, the gradient of the curve is modified as to provide the adjustments with a higher influence on the motorcycle set-up at any racing value of the suspension.

### Advantageous Effects

The object of this invention consequently avoids spring replacement, granting a considerable saving of effort and time, key factors to achieving good performance in competitions.

One of the most surprising features of this invention is that the adjustment of the stiffness is continuous. This means that it is possible to get any value of stiffness included between the minimum and maximum values defined by the design of the spring or the specific application of the system.

Below are described a preferred or best mode and two other embodiments of the springs stiffness adjusting systems according to the invention herein disclosed. The embodiments of the invention are set forth without any loss of generality to, and without imposing limitations upon, the claimed invention.

### Description of Drawings

### Best Mode

### Embodiment - Short spring

The following is the example of a system that can continuously modify the stiffness of a spring. It well explains the work of the mechanism (Table 2).

This example refers to the case where the spring inside the shank of the fork does not reach the cap, thus requiring an additional mean.

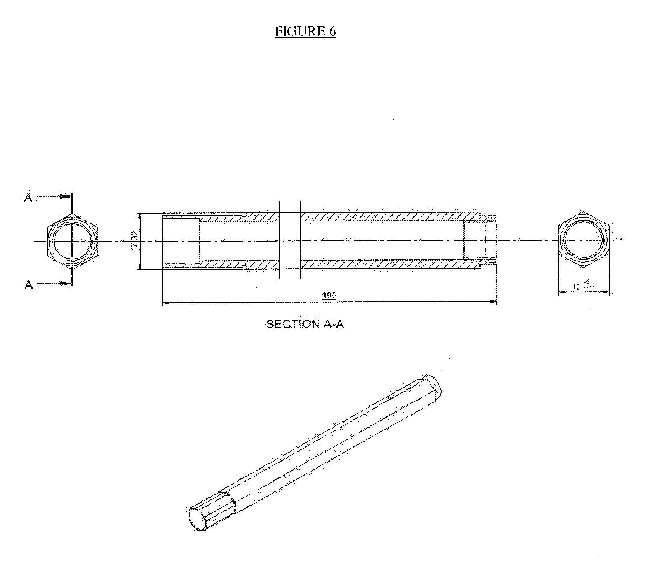

The inner leading element (1), preferably an hexagonal section bar, described in detail in Figure 6, is the innermost part of the mechanism and receives the rotary motion externally given by the user through the adjustment nut (2) placed upon the cap (3). Said cap (3) remains fixed throughout the adjustment, being screwed by a thread (4) to the outer tube (5) of the shank, i.e. the connecting element between the fork and the bike.

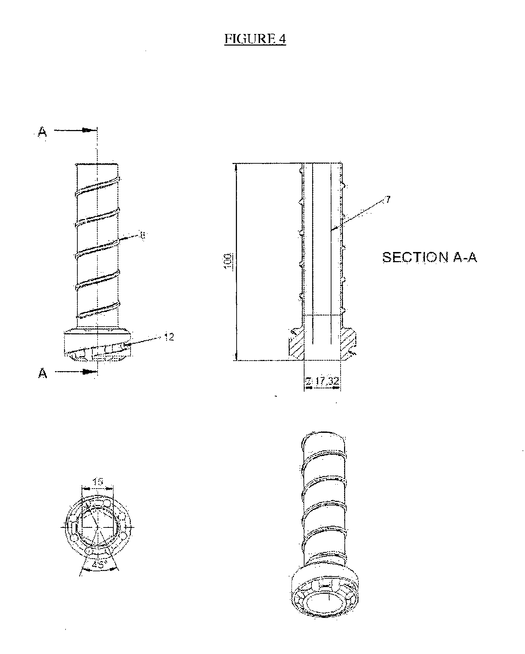

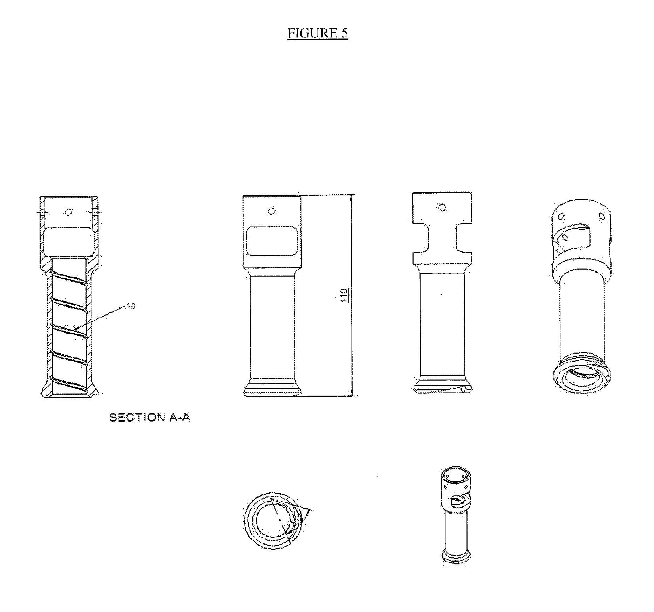

The body element (6), described in detail in Figure 4, is the central element of the mechanism and receives the rotation by said element (1) through the hexagonal hole (7) crossing it. On its outer surface there is a thread (8) having the same pitch of the spring (9) inside the fork. Said thread (8) must be coupled with the helical groove (10) on the inner surface of the third element (11), herein named the guidance element (11) and described in detail in Figure 5, and its aim is to give said body element (6) an helical path, once set in rotation by said hexagonal element (1). This trajectory is not prevented by said hexagonal mean (1) since said body element (6) is free to slide along its external surface. In its lower part said body element (6) has an helical groove that provides said spring (9) with a bearing surface. Said guidance element (11) is fixed to said cap (3) of the shank and has said helical groove (10), preferably a thread on its inner surface having a pitch substantially equal to the pitch of said spring (9). When adjusting the stiffness, said spring (9) maintains its position and does not rotate.

The work of the mechanism starts with the rotation of said adjustment nut (2) placed upon said cap (3) of the shank that sets said body element (6) in rotation. Said body element (6), driven by said guidance element (11), makes a helical path placing at a certain height of said spring (9), fitting in the coils and avoiding them.

The size of the pieces depends upon the type of fork in which they are mounted. Said body element (6) and said guidance element (11) have, without no loss of generality, a length preferably included between 50 and 200 mm, at least for motorcycle applications. The outer diameter of said body element (6) must be minimized so that no excessive weight overload the suspension. Without no loss of generality, the outer diameter can ranges preferably between 18 and 40 mm. The diameter of the lower part of said body element (6) should be almost equal to the outer diameter of said spring (9) in order to obtain a good bearing surface. The length of said inner leading element (1) depends on the maximum stroke of said spring (9) taken into account. For applications, for instance, in the bicycle industry, the size can decrease considerably compared to what above-described. On the contrary, it can remarkably increase in the automotive industry.

Moreover, the system lends itself to be used as a mechanism of variation of the preload of said spring (9) if the individual means are properly used. If said body element (6) was made translate vertically without rotating, it would compress said spring (9) modifying the preload. This condition is achieved by rotating said guidance element (11) and fixing said adjustment nut (2). Acting this way, said body element (6) slides along said inner leading element (1) without rotating. This use of the mechanism involves, however , a reassessment of the geometric structure of said cap (3).

### Mode for Invention

### Embodiment 2 - Long spring

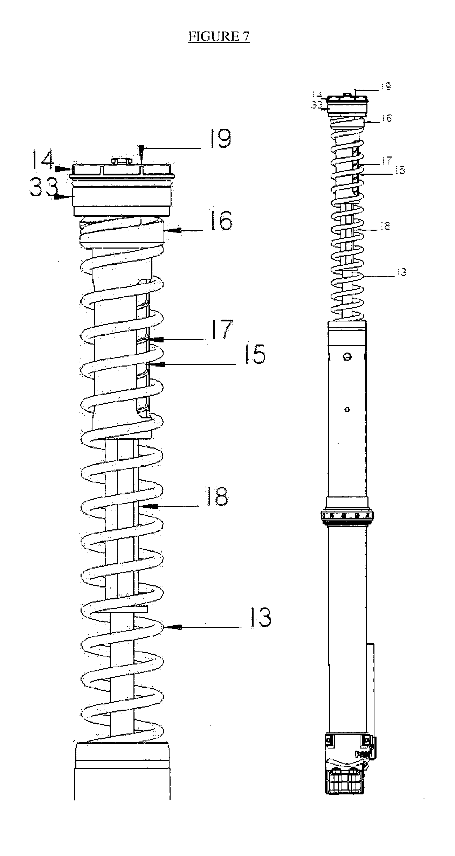

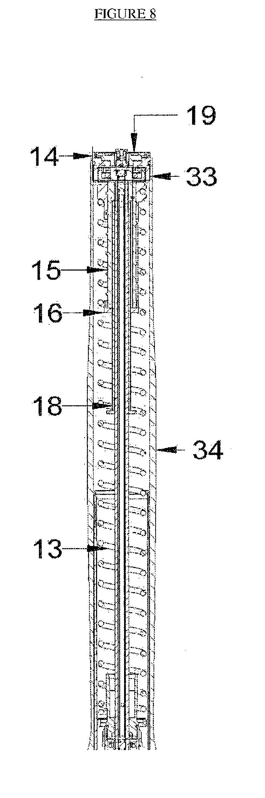

This embodiment (Figure 7) discloses a springs stiffness adjusting system wherein the spring (13) does reach the cap (14) and there is no room on the top of it for the means mentioned in the previous preferred mode.

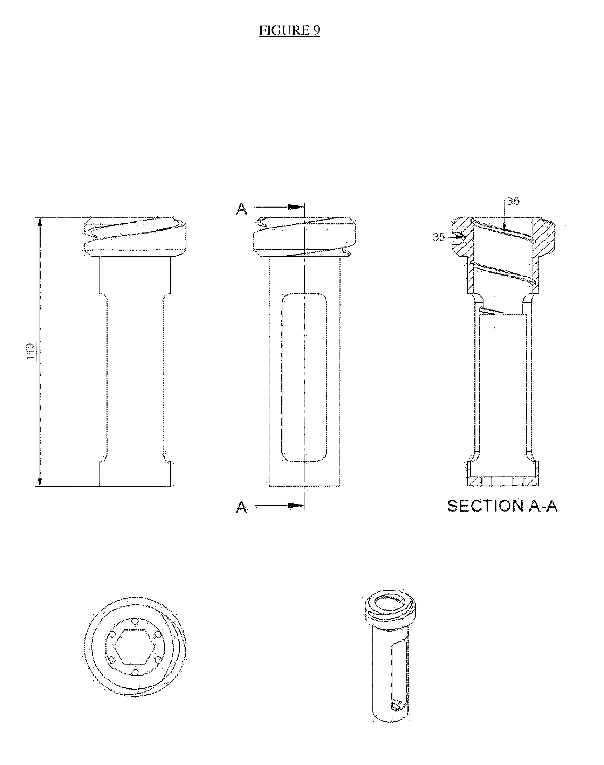

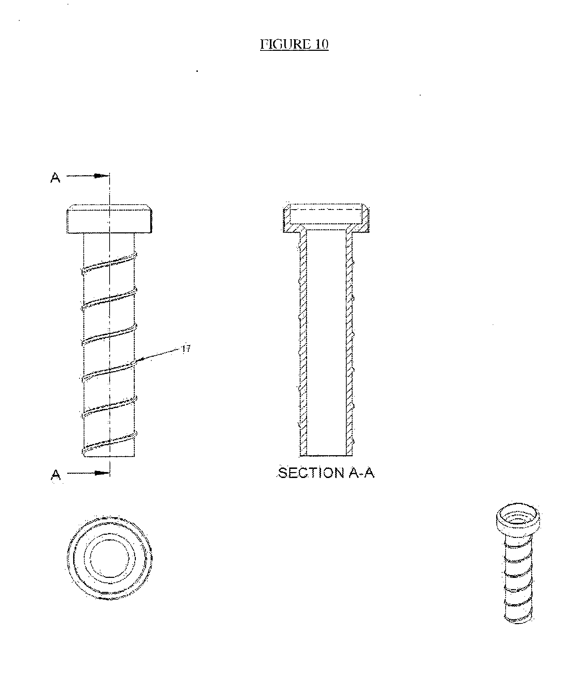

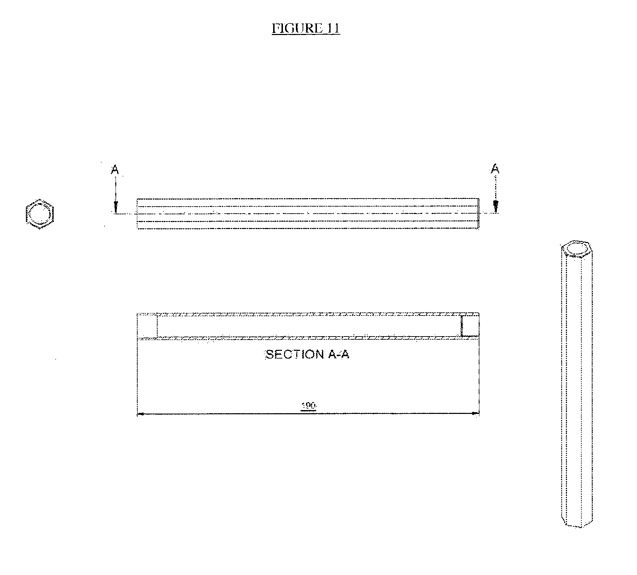

The guidance element (15), described in detail in Figure 10, is fixed while adjusting and it acts as a guide to the motion of the body element (16), described in detail in Figure 9, through a thread (17) with the same pitch of said spring (13). Said body element (16) rotates thanks to the motion of the inner leading element (18), the innermost element of the mechanism, set in motion by the internal part of the cap (19) and, at the same time, it slides along its surface making a helical path as described in embodiment 1 'The short spring'. While adjusting the stiffness, the spring maintains its position and does not rotate.

The size of the elements depends on the field of application which the fork is intended for and what has been said in relation to Embodiment 1 remains effective.

Again it is possible, with appropriate modifications to the geometry of said cap (14), to use the mechanism in order to modify the preload of said spring (13).

### Embodiment 3 - No body element rotation

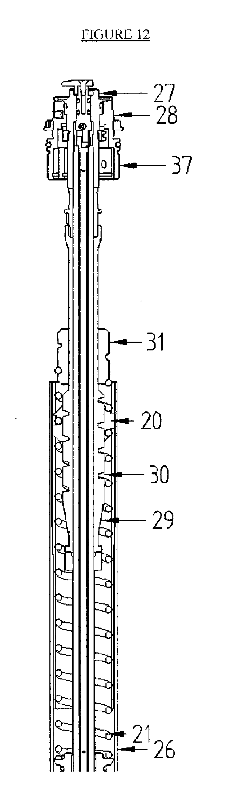

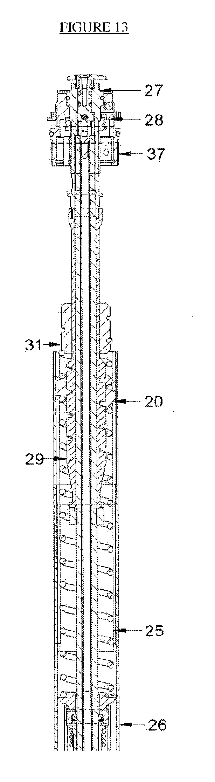

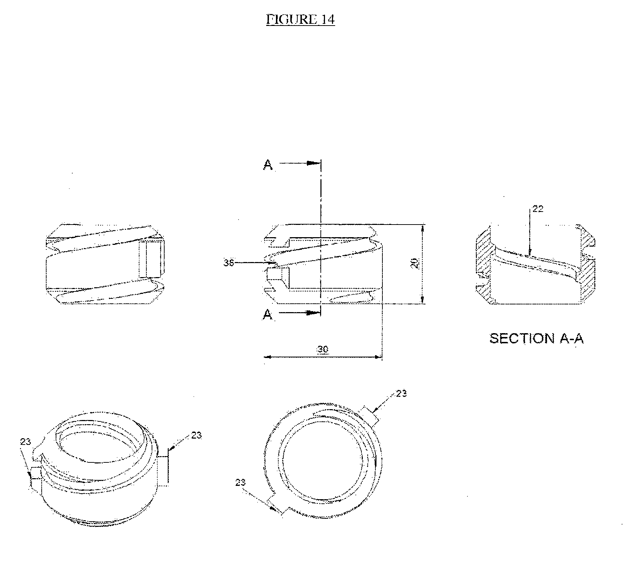

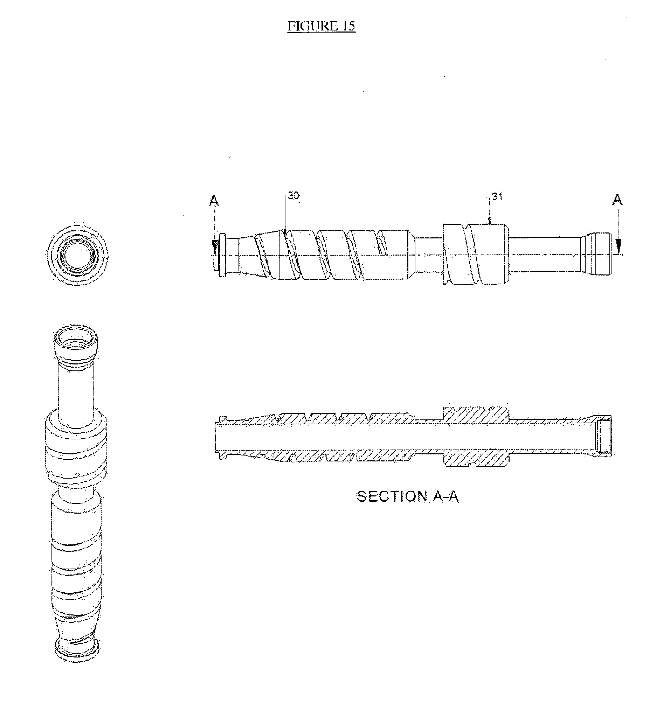

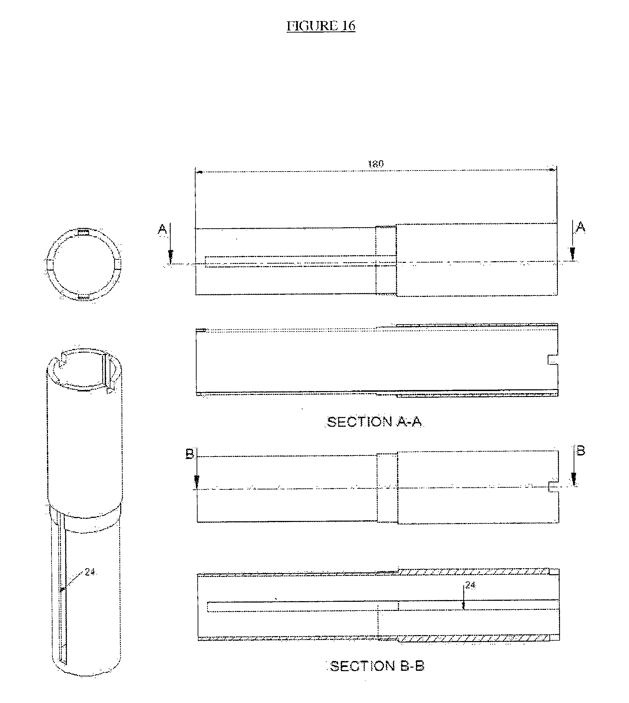

In this embodiment of the invention (Figure 12), a body element (20), described in detail in Figure 14, is simply considered as the element giving support to the spring (21) thus not including, as in the previous embodiment, said thread (8) or groove (35). The thread (22) that controls the helical motion of said body element (20) is obtained in the inner surface of the hole made axially in said body element (20). In order to stop the rotation of said body element (20) it is necessary to use two appendices (23) that fit into suitable grooves (24) made in an outer pipe (25), described in detail in Figure 16, to be connected to the shank. Said appendices (23) run vertically only. The initial rotation of the adjustment always starts with the adjustment nut (27) placed on the cap (28). This motion sets the rotation of the internal element (29), described in detail in Figure 15, directly connected with said adjustment nut (27). Said element (29) has on its outer surface a thread (30) having the same pitch of that of said spring (21).

This element is also meant to determine the maximum stroke of said spring (21) and its unique motion is rotation. The operation principle, therefore, iworks as follows: the rotation of said adjustment nut (27) makes the rotation of the element (29) which, as a consequence, sets said spring (21) in rotation. The thread (30) is likely to set said body element (20) in rotation. On the contrary, said body element (20) is bound to run along the two vertical grooves (24). Said spring (21) rotates integrally with said element (29) thanks to a suitable appendix of said element (29).

Again, it is possible, with appropriate modifications to the geometry of said cap (28), to modify the preload of said spring (21).

### Industrial Applicability

This innovative system herein disclosed can be conveniently applied to suspensions of any kind of vehicle based on springs such as cars, trucks, campers, bicycles, quads, and motorcycles of all types especially when stiffness modification is required. Moreover, the system is suitable to be operated by electric engines.

## Claims

1. A spring stiffness adjusting system for adjusting the stiffness k of a coil spring (9; 13) of a mechanical system, like in particular a suspension or a fork, with k being defined by the formula F = k * x, where F stands for the force generated by the spring as a result of a compression x to which it is subjected, comprising:
- an inner leading element (1; 18) for receiving a rotary motion externally given through an adjustment nut (2; 19) placed upon a cap (3; 14) that is connected by a thread (4; 33) to an outer tube (5, 34) of said adjusting system and remains fixed throughout the spring stiffness adjustment;
- a body element (6; 16) for receiving the rotation of said inner leading element (1; 18), generated by the rotary motion of said adjustment nut (2; 19), with said body element (6; 16) in turn comprising:
- a helical grooved surface (12; 35) having a thread pitch substantially equal to the pitch of the coils of said spring (9; 13) and bearing an entire number or at least a portion of the spring coils; and
- a machined surface (8; 36), threaded or grooved, having a thread pitch substantially equal to the pitch of the coils of said spring (9; 13);
and
- a guidance element (11; 15), fixed to said cap (3; 14) and having a inner machined surface (10; 17), threaded or grooved, coupled with the machined surface (8; 36) of said body element (6; 16);
wherein, in the work, following the rotation of said adjustment nut (2; 19), said guidance element (11; 15) forces and guides said body element (6; 16) to move into an helical path, once said body element (6; 16) is set in rotation by said inner leading element (1; 18), while said spring (9; 13) maintains its position and does not rotate,
whereby the body element (6; 16), while fitting in the coils of the spring (9; 13), moves into said helical path so as to inactivate/activate a portion of said coils and thereby adjust the stiffness of the spring (9; 13) by making it adapted to be compressed at different positions along its length.

2. The system of claim 1, wherein it is configured such that the stiffness adjustment of said spring (9; 13) ranges continuously between the maximum and minimum values defined by the design of said spring (9, 13) or by the specific application of said adjusting system.

3. The system of claim 1 or 2, wherein said spring (9) is designed to not reach the cap (3) connected to the outer tube (5) of said adjusting system.

4. The system of claim 1 or 2, wherein said spring (13) is designed to rest directly onto said cap (14) and to be pushed, in particular during the stroke of a fork in which the system is implemented, by the same cap (14).

5. A spring stiffness adjusting system for adjusting the stiffness of a coil spring (21) of a mechanical system, like in particular a suspension or a fork, comprising:
- a inner leading element (29) for receiving the rotary motion externally given through an adjustment nut (27) that is placed upon a cap (28) which is connected by a thread (37) to an outer tube (26) of said adjusting system and remains fixed throughout the stiffness adjustment,
- a body element (20), and
- a guidance element,
wherein said inner leading element (29) comprises a machined surface (30), threaded or grooved, having a thread pitch substantially equal to the pitch of said spring (21), for blocking said spring (21) to said inner leading element (29);
wherein said body element (20) comprises:
- a machined surface (22), threaded or grooved, having a thread pitch substantially equal to the pitch of said spring (21), with said machined surface (22) of the body element being coupled with the machined surface (30) of said inner leading element (29); and
- one or two appendices (23) protruding from the outer surface of said body element (20);
wherein said guidance element is made by an outer pipe (25) having a machined surface with axial grooves (24) coupled with said one or two appendices (23) of said body element (20); and
wherein, in the work, following the rotation of said adjustment nut (27), said inner leading element (29) is caused to rotate, thereby setting also said spring (21) in rotation together with said inner leading element (29), while said body element (20) is prevented to rotate by said one or more appendices (23) and is bound to move axially along said one or more axial grooves (24),
whereby the body element (20), while fitting in the coils of the spring (9; 13), moves axially along said spring (21) which rotates together with said inner leading element (29), so as to inactivate/activate a portion of said coils and thereby adjust the stiffness of the spring (21) by making it adapted to be compressed at different positions along its length.

6. The system according to any one of the preceding claims, **characterised in that** the stiffness adjustment is manual.

7. The system according to any one of the preceding claims, wherein the stiffness adjustment is actuated by an electric engine or device.

8. The system of claim 1 wherein said suspension is a vehicle suspension for vehicles, such as cars, trucks, campers, bicycles, quads, and motorcycles or the like.

9. The system of claim 1 wherein said mechanical system is any mechanical system comprising one or more springs which require stiffness adjustment.

10. The system of claim 1 or 5, wherein the mechanical system, in which this spring stiffness adjusting system is implemented, is designed for adjusting independently either the preload of said spring (9; 13; 21) or the stiffness of the same spring by means of a modified cap (3; 14; 28) of said outer tube.

## Patentansprüche

1. Federsteifigkeitseinstellsystem zum Einstellen einer Steifigkeit k einer Spiralfeder (9; 13) eines mechanischen Systems, wie insbesondere einer Aufhängung oder einer Gabel, wobei k durch die Formel F = k * x definiert ist, wobei F für die Kraft steht, welche von der Feder als ein Ergebnis einer Kompression x, welcher sie ausgesetzt ist, erzeugt wird, umfassend:
- ein inneres Führungselement (1; 18) zum Aufnehmen einer Drehbewegung, welche durch eine auf einer Kappe (3; 14) angeordneten Einstellmutter (2; 19) von außen vorgegeben wird, welche über ein Gewinde (4; 33) mit einem Außenrohr (5, 34) des Einstellsystems verbunden ist und über die Federsteifigkeitseinstellung hinweg ortsfest bleibt;
- ein Körperelement (6; 16) zum Aufnehmen der Drehung des inneren Führungselements (1; 18), welche von der Drehbewegung der Einstellmutter (2; 19) erzeugt wird, wobei das Körperelement (6; 16) wiederum umfasst:
- eine spiralförmig genutete Fläche (12; 35), welche eine im Wesentlichen gleiche Gewindesteigung wie die Steigung der Spiralen der Federn (9; 13) aufweist und eine ganze Anzahl oder zumindest einen Abschnitt der Federspiralen trägt; und
- eine bearbeitete Fläche (8; 36) mit Gewinde oder genutet, welche eine im Wesentlichen gleiche Gewindesteigung wie die Steigung der Spiralen der Feder (9; 13) aufweist; und
- ein Führungselement (11; 15), welches an der Kappe (3; 14) befestigt ist und eine innere bearbeitete Fläche (10; 17) mit Gewinde oder genutet aufweist, welche mit der bearbeiteten Fläche (8; 36) des Körperelements (6; 16) gekoppelt ist;
wobei im Betrieb nach der Drehung der Einstellmutter (2; 19) das Führungselement (11; 15) das Körperelement (6; 16) drängt und führt, sich in einer spiralförmigen Bahn zu bewegen sobald das Körperelement (6; 16) von dem inneren Führungselement (1; 18) in Drehung versetzt wird, während die Feder (9; 13) ihre Position beibehält und sich nicht dreht,
wobei sich das Körperelement (6; 16), während es in den Spiralen der Feder (9; 13) eingepasst ist, in den spiralförmigen Pfad bewegt, um einen Abschnitt der Spiralen zu deaktivieren/aktivieren und dadurch die Steifigkeit der Feder (9; 13) einzustellen, indem sie angepasst wird, um an unterschiedlichen Positionen entlang ihrer Länge zusammengedrückt zu werden.

2. System nach Anspruch 1, wobei es derart ausgestaltet ist, dass die Steifigkeitseinstellung der Feder (9; 13) kontinuierlich zwischen dem maximalen und minimalen Wert reicht, welche durch die Ausführung der Feder (9, 13) oder von der speziellen Anwendung des Einstellsystems definiert sind.

3. System nach Anspruch 1 oder 2, wobei die Feder (9) ausgestaltet ist, die mit dem Außenrohr (5) des Einstellsystems verbundene Kappe nicht zu erreichen.

4. System nach Anspruch 1 oder 2, wobei die Feder (13) ausgestaltet ist, direkt an der Kappe (14) anzuliegen und insbesondere während des Hubs der Gabel, in welcher das System angewendet wird, von der gleichen Kappe (14) gedrückt zu werden.

5. Federsteifigkeitseinstellsystem zum Einstellen der Steifigkeit einer Spiralfeder (21) eines mechanischen Systems, wie insbesondere einer Aufhängung oder einer Gabel, umfassend:
- ein inneres Führungselement (29) zum Aufnehmen der Drehbewegung, welche durch eine auf einer Kappe (28) angeordneten Einstellmutter (27) von außen vorgegeben wird, welche mit einem Gewinde (37) mit einem Außenrohr (26) des Einstellsystems verbunden ist und über die Steifigkeitseinstellung hinweg ortsfest bleibt;
- ein Körperelement (20), und
- ein Führungselement,
wobei das innere Führungselement (29) eine bearbeitete Fläche (30) mit Gewinde oder genutet umfasst, welche eine im Wesentlichen gleiche Gewindesteigung wie die Steigung der Feder (21) aufweist, um die Feder (21) mit dem inneren Führungselement (29) zu verklemmen;
wobei das Körperelement (20) umfasst:
- eine bearbeitete Fläche (22) mit Gewinde oder genutet, welche eine im Wesentlichen gleiche Gewindesteigung wie die Steigung der Feder (21) aufweist, wobei die bearbeitete Fläche (22) des Körperelements mit der bearbeiteten Fläche (30) des inneren Führungselements (29) gekoppelt ist; und
- ein oder zwei Ansätze (23), welche von der Außenfläche des Körperelements (20) hervorragen;
wobei das Führungselement durch ein Außenrohr (25) gebildet wird, welches eine bearbeitete Fläche mit axialen Nuten (24) aufweist, welche mit dem einen oder den zwei Fortsätzen (23) des Körperelements (20) gekoppelt sind; und
wobei im Betrieb nach der Drehung der Einstellmutter (27) bewirkt wird, dass das innere Führungselement (29) sich dreht, wobei ferner die Feder (21) zusammen mit dem inneren Führungselement (29) in Drehung gesetzt wird, während mit dem einen oder den mehreren Ansätzen (23) verhindert wird, dass sich das Körperelement (20) dreht und begrenzt wird, sich axial entlang der einen oder mehreren axialen Nuten (24) zu bewegen,
wobei sich das Körperelement (20), während es in die Spiralen der Feder (9; 13) eingepasst ist, entlang der Feder (21) axial bewegt, welche sich zusammen mit dem inneren Führungselement (29) dreht, um einen Abschnitt der Spiralen zu deaktivieren/aktivieren und dadurch die Steifigkeit der Feder (21) anzupassen, indem sie angepasst wird, um in unterschiedlichen Positionen entlang ihrer Länge zusammengedrückt zu werden.

6. System nach einem der vorhergehenden Ansprüche, **dadurch gekennzeichnet, dass** die Steifigkeitseinstellung manuell ist.

7. System nach einem der vorhergehenden Ansprüche, wobei die Steifigkeitseinstellung von einer elektrischen Maschine oder Vorrichtung betätigt wird.

8. System nach Anspruch 1, wobei die Aufhängung eine Fahrzeugaufhängung für Fahrzeuge, wie z.B. Autos, Lastkraftwagen, Wohnmobile, Fahrräder, Vierradantriebwagen und Motorräder oder dergleichen, ist.

9. System nach Anspruch 1, wobei das mechanische System ein beliebiges mechanisches System ist, welches eine oder mehrere Federn umfasst, welche eine Steifigkeitseinstellung erfordern.

10. System nach Anspruch 1 oder 5, wobei das mechanische System, in welchem dieses Federsteifigkeitseinstellsystem angewendet wird, ausgestaltet ist, entweder die Vorspannung der Feder (9; 13; 21) oder die Steifigkeit derselben Feder mittels einer modifizierten Kappe (3; 14; 28) des Außenrohrs unabhängig einzustellen.

## Revendications

1. Système de réglage de la rigidité de ressorts pour régler la rigidité k d'un ressort hélicoïdal (9 ; 13) d'un système mécanique, comme en particulier une suspension ou une fourche, k étant défini par la formule F = k * x, où F représente la force générée par le ressort résultant d'une compression x à laquelle il est soumis, comprenant :
- un élément d'attaque interne (1 ; 18) pour recevoir un mouvement rotatif transmis de l'extérieur par un écrou de réglage (2 ; 19) placé sur un chapeau (3 ; 14) qui est raccordé par un filetage (4 ; 33) à un tube extérieur (5 ; 34) dudit système de réglage et reste fixé au cours du réglage de la rigidité de ressorts ;
- un élément structurel (6 ; 16) pour recevoir les rotations dudit élément d'attaque intérieur (1 ; 18), généré par le mouvement rotatif dudit écrou de réglage (2 ; 19), avec ledit élément structurel (6 ; 16) comprenant à son tour :
- une surface rainurée hélicoïdale (12 ; 35) ayant un pas de filetage essentiellement égal au filetage des spires dudit ressort (9 ; 13) et supportant un nombre total ou au moins une partie des spires de ressort ; et
- une surface usinée (8 ; 36), filetée ou rainurée, ayant un pas de filetage essentiellement égal au pas des spires dudit ressort (9 ; 13) ;
et
- un élément guide (11 ; 15) fixé audit chapeau (3 ; 14) et ayant une surface usinée intérieure (10 ; 17), filetée ou rainurée, couplée à la surface usinée (8 ; 36) dudit élément structurel (6 ; 16),
dans lequel, en opération, suivant la rotation dudit écrou de réglage (2 ; 19), ledit élément guide (11 ; 15) force et guide ledit élément structurel (6 ; 16) à se déplacer dans un chemin hélicoïdal, une fois que ledit élément structurel (6 ; 16) est mis en rotation par ledit élément d'attaque intérieur (1 ; 18), pendant que ledit ressort (9 ; 13) maintient sa position et n'est pas en rotation,
l'élément structurel (6 ; 16), tout en s'intégrant dans les spires du ressort (9 ; 13), se déplaçant dans un chemin hélicoïdal de manière à désactiver/activer une partie desdites spires et ainsi régler la rigidité du ressort (9; 13) en permettant de l'adapter pour être comprimé à différentes positions dans sa longueur.

2. Système selon la revendication 1, dans lequel il est configuré de telle sorte que le réglage de rigidité dudit ressort (9 ; 13) varie en continu entre les valeurs maximum et minimum définies par le modèle dudit ressort (9 ; 13) ou par l'application spécifique dudit système de réglage.

3. Système selon la revendication 1 ou 2, dans lequel ledit ressort (9) est conçu pour ne pas atteindre le chapeau (3) raccordé au tube extérieur (5) dudit système de réglage.

4. Système selon la revendication 1 ou 2, dans lequel ledit ressort (13) est conçu pour s'appuyer directement sur ledit chapeau (14) et pour être poussé, en particulier pendant la course d'une fourche dans laquelle le système est mis en oeuvre, par le même chapeau (14).

5. Système de réglage de la rigidité de ressorts pour régler la rigidité k d'un ressort hélicoïdal (21) d'un système mécanique, comme en particulier une suspension ou une fourche, comprenant :
- un élément d'attaque intérieur (29) pour recevoir le mouvement rotatif transmis par l'extérieur par un écrou de réglage (27) qui est placé sur un chapeau (28) qui est raccordé par un filetage (37) à un tube extérieur (26) dudit système de réglage et reste fixé au cours du réglage de rigidité,
- un élément structurel (20), et
- un élément guide,
dans lequel ledit élément d'attaque intérieur (29) comprend une surface usinée (30), filetée ou rainurée, ayant un pas de filetage essentiellement égal au pas dudit ressort (21), pour bloquer ledit ressort (21) audit élément d'attaque intérieur (29) ;
dans lequel ledit élément structurel (20) comprend :
- une surface usinée (22), filetée ou rainurée, ayant un pas de filetage essentiellement égal au pas dudit ressort (21), avec ladite surface usinée (22) de l'élément structurel étant couplée à la surface usinée (30) dudit élément d'attaque intérieur (29) ; et
- un ou deux appendices (23) faisant saillie hors de la surface extérieure dudit élément structurel (20) ;
dans lequel ledit élément guide est constitué d'une conduite extérieure (25) ayant une surface usinée avec des rainures axiales (24) couplée audit/auxdits un ou deux appendices (23) dudit élément structurel (20) ; et dans lequel, dans le travail, suivant la rotation dudit écrou de réglage (27), ledit élément d'attaque intérieur (29) est amené à entrer en rotation, en mettant également ledit ressort (21) en rotation conjointement avec ledit élément d'attaque intérieur (29), pendant que ledit élément structurel (20) est empêché de tourner par un ou plusieurs desdits appendices (23) et est astreint à se déplacer axialement le long desdites une ou plusieurs rainures axiales (24),
l'élément d'attaque (20), tout en s'intégrant dans les spires du ressort (9 ; 13), se déplaçant axialement le long dudit ressort (21) qui tourne conjointement avec ledit élément d'attaque intérieur (29), de manière à désactiver/activer une partie desdites spires et ainsi régler la rigidité du ressort (21) en permettant de l'adapter à être comprimé à différentes positions dans sa longueur.

6. Système selon l'une quelconque des revendications précédentes, **caractérisé par le fait que** le réglage de rigidité est manuel.

7. Système selon l'une quelconque des revendications précédentes, dans lequel le réglage de rigidité est actionné par un moteur ou un appareil électrique.

8. Système selon la revendication 1, dans lequel ladite suspension est une suspension de véhicule pour véhicules, tels que des voitures, camions, camping-cars, bicyclettes, quads et motocyclettes ou similaires.

9. Système selon la revendication 1, dans lequel ledit système mécanique est un quelconque système mécanique comprenant un ou plusieurs ressorts qui nécessitent un réglage de rigidité.

10. Système selon la revendication 1 ou 5, dans lequel le système mécanique, dans lequel le système de réglage de rigidité de ressort est mis en oeuvre, est conçu pour régler indépendamment soit la tension préalable dudit ressort (9 ; 13 ; 21), soit la rigidité dudit ressort au moyen d'un chapeau modifié (3 ; 14 ; 28) dudit tube extérieur.
